# FASCICULE DE BREVET EUROPEEN

(11) **EP 2 928 677 B1**
(45) Date de publication et mention de la délivrance du brevet: **19.07.2017**
(21) Numéro de dépôt: 13808147.6
(22) Date de dépôt: 03.12.2013
(51) Int. Cl.: B29D 30/06

(54) **MOULE DE CUISSON D'UNE EBAUCHE D'ENVELOPPE DE PNEUMATIQUE COMPRENANT DES SECTEURS MOBILES**
FORM MIT BEWEGLICHEN SEGMENTEN ZUR VULKANISIERUNG EINES REIFENROHLINGS
TYRE CURING MOULD COMPRISING MOVABLE SECTORS.

(30) Priorité: 04.12.2012 FR 1261607
(43) Date de publication de la demande: 14.10.2015
(73) Titulaire: Compagnie Générale des Etablissements Michelin, 63000 Clermont-Ferrand (FR)
(72) Inventeur: DEFAISSE, Christian, F-63040 Clermont-Ferrand Cedex 9 (FR); RENAUX, Benjamin, F-63040 Clermont-Ferrand Cedex 9 (FR); MICHELIN, Rudy, F-63040 Clermont-Ferrand Cedex 9 (FR); DALVERNY, François, F-63040 Clermont-Ferrand Cedex 9 (FR); MEDARD, Etienne, F-63040 Clermont-Ferrand Cedex 9 (FR)
(74) Mandataire: Noel, Luminita
(86) Numéro de dépôt international: PCT/FR2013/052920
(87) Numéro de publication internationale: WO 2014/087089

(56) Documents cités:
- EP-A2- 0 908 296
- WO-A1-2011/001095
- DE-A1- 2 422 406
- GB-A- 1 176 162
- US-A- 3 704 082
- US-A- 5 141 424

## Description

L'invention concerne la fabrication des enveloppes de pneumatiques et en particulier les moules de cuisson de l'ébauche de l'enveloppe. Des moules de cuisson d'une ébauche d'enveloppe de pneumatique comportant des secteurs mobiles répartis circonférentiellement et destinés à mouler la bande de roulement de l'enveloppe, sont bien connus.

Dans le document GB 1176162 - A un mouvement de basculement des secteurs radialement vers l'extérieur, lors de l'ouverture du moule, est causé par l'extraction des pneus vulcanisés.

Dans le document EP 908296 - A le basculement des secteurs est obtenu par des ressorts.

Dans le document US 3704082 - A le basculement des secteurs est obtenu par des vérins.

Dans le document US 5141424 - A le basculement des secteurs radialement vers l'extérieur est obtenu aussi par des ressorts, tandis que le basculement radialement vers l'intérieur est causé par la coquille supérieure par l'intermédiaire d'une plaque de glissement.

Dans le document DE 2422406 - A le basculement radial des secteurs est aussi causé par la coquille supérieure ou inférieure, par l'intermédiaire de crochets. On connaît du document WO 2011/001095 un moule de cuisson d'une ébauche de pneumatique comprenant des coquilles supérieure et inférieure mobiles à coulissement en direction l'une de l'autre et servant à mouler les flancs du pneumatique, ainsi que des secteurs latéraux mobiles en direction radiale à l'axe du moule et servant à mouler la bande de roulement. Le moule est agencé de sorte que, lors de l'ouverture, le coulissement vers le haut de la coquille inférieure entraîne le coulissement radial des secteurs par rapport à la coquille afin de libérer l'enveloppe. À cette fin, à chaque secteur est associé un levier articulé au secteur, relié au bâti du moule et en appui sur une rampe de la coquille formant une face orientée en direction de l'axe.

Le mécanisme décrit dans ce document présente l'inconvénient de ne pas autoriser le basculement complet des secteurs lors de l'ouverture, ce qui peut s'avérer utile pour faciliter les manoeuvres d'extraction du pneumatique en fin de cycle de cuisson. De plus, il arrive que, au début de l'éloignement des secteurs, ceux-ci soient retenus élastiquement par la gomme de l'enveloppe puis, au moment de la séparation, basculent brutalement vers l'arrière avec le levier. Il est alors nécessaire de faire basculer manuellement les secteurs en sens contraire pour les remettre en place, ce qui constitue une opération laborieuse qui augmentait les temps de cycle.

Ce mécanisme nécessite la production d'efforts importants pour séparer les secteurs à l'égard de l'enveloppe, en particulier lorsque l'enveloppe présente sur sa bande de roulement des sculptures agressives qui rendent cette séparation plus difficile. De ce fait, le mécanisme est relativement encombrant, ce qui augmente le volume de l'installation.

Un but de l'invention est de maîtriser et d'accompagner le basculement arrière des secteurs lors de la phase finale de l'ouverture du moule.

À cet effet, on prévoit selon l'invention un moule de cuisson d'une ébauche d'enveloppe de pneumatique, comme défini dans la revendication 1, le moule comportant,
- un bâti présentant un axe,
- au moins une coquille apte à mouler un flanc de l'enveloppe, mobile axialement et présentant une rampe formant une face orientée en direction opposée à l'axe,
- des secteurs répartis circonférentiellement et destinés à mouler une bande de roulement de l'enveloppe et
- pour au moins l'un des secteurs, un levier relié d'une part au secteur, d'autre part au bâti et apte à être relié d'autre part encore à la rampe de sorte qu'un mouvement axial d'éloignement de la coquille par rapport au bâti entraîne successivement un mouvement radial du secteur par rapport à la coquille puis un basculement du secteur radialement vers l'extérieur.

Ainsi, cette orientation de la rampe permet, en poursuivant le mouvement de montée de la coquille, de faire basculer le secteur radialement vers l'extérieur. Le basculement donne un meilleur accès à l'enveloppe une fois le moule ouvert. Il facilite l'extraction de l'enveloppe puis la mise en place d'une ébauche à cuire. Ce montage permet également de réduire le volume occupé par le mécanisme. Et ce dernier demeure en mesure de produire des efforts importants pour séparer les secteurs de l'enveloppe.

Des formes préférentielles de l'invention sont définies dans les revendications dépendantes. Dans un mode de réalisation, le moule est agencé de sorte que la coquille déplace le secteur jusqu'à un point à partir duquel le levier n'est plus relié à la coquille indépendamment du secteur.

On peut donc prévoir par exemple que, à un certain stade du mouvement, la coquille coopère directement avec le secteur, le levier ne servant qu'à transmettre les efforts au début du mouvement pour la séparation des secteurs par rapport à l'enveloppe.

De préférence, le levier porte un galet apte à rouler sur la rampe.

Ce galet, qui forme une pièce d'usure, encaisse une grande partie des efforts et facilite leur transmission.

Avantageusement, le moule est agencé de sorte que la coquille déplace le secteur jusqu'à un point à partir duquel le galet n'est plus en contact avec la coquille.

On peut prévoir que le moule est agencé de sorte qu'un coulissement axial de la coquille en direction du bâti, combiné à l'effet de la gravité, entraîne un basculement du secteur radialement vers l'intérieur.

Ainsi, l'éloignement précité des secteurs n'engendre pas de manoeuvre supplémentaire pour l'opérateur. En effet, c'est le mouvement de la coquille elle-même, combiné à l'effet de la gravité, qui replace ensuite les secteurs dans la bonne position pour le cycle suivant.

De préférence, le moule est agencé de sorte que le secteur vient en contact avec une face de la coquille qui est inclinée par rapport à un plan perpendiculaire à l'axe et en direction opposée à l'axe, l'angle de la face par rapport au plan étant compris de préférence entre 0° et 5°.

Avantageusement, le levier est articulé au secteur autour d'un axe monté coulissant dans un logement du secteur.

De préférence, le moule comprend des moyens formant butée aptes à limiter une rotation du secteur par rapport au levier en direction opposée à l'axe.

Avantageusement, le levier est monté de façon à être uniquement mobile à rotation par rapport au bâti.

De préférence, le moule comprend une butée apte à limiter une rotation du levier par rapport au bâti en direction opposée à l'axe.

Grâce aux butées précitées, la rotation des secteurs vers l'arrière au-delà d'un certain angle est prohibée.

On peut aussi prévoir que la rampe présente un profil non rectiligne.

Dans un mode de réalisation, la rampe présente une inclinaison par rapport à l'axe plus forte dans un tronçon correspondant à la fin du mouvement d'éloignement que dans un tronçon correspondant au début de ce mouvement.

Ainsi, au début de l'éloignement des secteurs, on les sollicite avec une intensité relativement importante quitte à les éloigner de façon relativement lente. Il s'agit en effet au début de privilégier une bonne séparation des secteurs par rapport à l'enveloppe. Une fois cette séparation obtenue, on peut augmenter la vitesse d'éloignement.

Par exemple, la rampe présente une portion à profil courbe ayant un centre de courbure situé d'un côté de la rampe opposé à l'axe.

Avantageusement, la rampe présente une portion à profil rectiligne.

Dans un mode de réalisation, le levier présente un prolongement apte à s'étendre sous la coquille.

Ce prolongement permet lui aussi de limiter la rotation du levier par rapport à la coquille et également de faire basculer le secteur en direction de l'axe lorsque la coquille coulisse pour la fermeture du moule.

On prévoit également selon l'invention un procédé de fabrication d'une enveloppe de pneumatique, comme défini dans la revendication 15, dans lequel procédé on utilise un moule selon l'invention.

Nous allons présenter trois modes de réalisation du moule selon l'invention à titre d'exemples non limitatifs et à l'appui des dessins annexés sur lesquels :
- la figure 1 est une vue partielle en coupe d'un moule selon un mode de réalisation de l'invention, montrant un secteur ;
- la figure 2 est une vue en perspective de la partie du moule illustrée à la figure 1 ;
- la figure 3 est une vue à plus grande échelle d'une partie du moule de la figure 1 ;
- les figure 4 à 9 sont des vues analogues à la figure 1 illustrant des étapes du fonctionnement du moule ;
- la figure 10 est une vue analogue à la figure 1 montrant un deuxième mode de réalisation du moule selon l'invention ;
- les figures 11 et 12 sont des vues analogues aux figures 2 et 3 illustrant un troisième mode de réalisation du moule ;
- les figures 13 et 14 illustrent certaines des pièces du moule de la figure 11 ; et
- les figures 15 et 16 sont des vues analogues à la figure 11 montrant deux étapes du fonctionnement du moule.

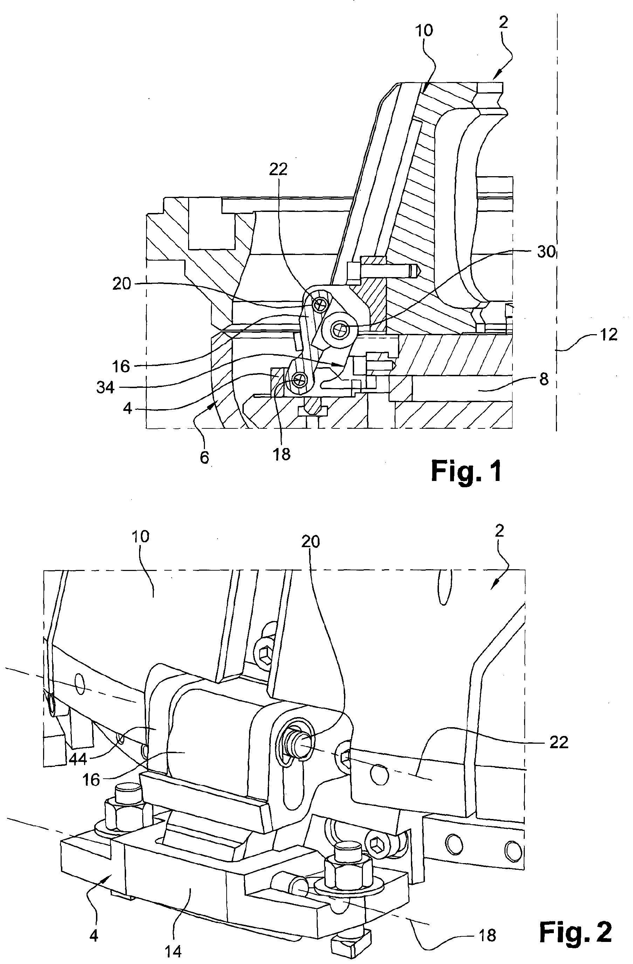

Nous allons décrire en référence aux figures 1 à 9 un moule selon un premier mode de réalisation de l'invention. Il s'agit d'un moule servant à la cuisson et à la mise en forme d'ébauches d'enveloppe de pneumatique de roue. Il peut s'agir d'une roue de véhicule tel qu'un véhicule utilitaire, un véhicule de tourisme et un véhicule de type poids-lourd ou encore d'un engin de génie civil.

Le moule 2 est globalement du type de celui décrit dans le document WO 2011/001095 présenté plus haut. Pour plus de détails sur la constitution du moule et son fonctionnement, on pourra donc se référer à ce document qui est ici incorporé par référence.

Le moule comprend un bâti 4, un plateau 6 rigidement solidaire d'une coquille inférieure 8, un plateau rigidement solidaire d'une coquille supérieure qui n'ont pas été illustrés et des secteurs latéraux 10. Seul l'un d'eux a été illustré sur les figures. Les secteurs sont disposés de façon à être l'image les uns des autres par une rotation autour de l'axe principal vertical 12 du moule.

Les deux coquilles sont montées coulissantes par rapport au bâti, indépendamment l'une de l'autre, suivant la direction de l'axe 12. Elles servent à mouler les flancs respectifs du pneumatique tandis que les secteurs 10 servent à en mouler la bande de roulement avec les sculptures. Lors de la cuisson de l'ébauche, les deux coquilles forment avec les secteurs une enceinte fermée dans laquelle l'ébauche de gomme crue est reçue pour être vulcanisée et mise en forme. Pour l'ouverture du moule, les deux coquilles s'éloignent l'une de l'autre suivant la direction de l'axe 12 tandis que les secteurs s'éloignent de cet axe en direction radiale. Les mouvements en sens inverse ont lieu pour la fermeture du moule.

À chaque secteur 10 est associée une pièce telle qu'une semelle 14 rigidement solidaire du bâti 4, ainsi qu'un levier 16 également appelé basculeur ou guignol. Il y a donc autant de semelles et de leviers que de secteurs. Le levier 16 forme un ensemble rigide articulé à la semelle 14 autour d'un axe 18. La rotation autour de cet axe est le seul mouvement du levier qui soit permis par rapport à la semelle.

Le levier 16 porte un arbre 20 articulé au levier autour d'un axe 22, cet arbre étant par ailleurs monté mobile dans une gorge, logement ou ouverture 24 du secteur. Cette gorge présente en l'espèce une forme allongée rectiligne verticale parallèle à l'axe 12 de sorte qu'elle n'autorise qu'un coulissement vertical de l'arbre par rapport au secteur. Le levier 16 est donc relié au secteur au moyen d'un pivot coulissant.

Le levier 16 porte en outre un arbre 26 articulé au levier autour d'un axe 28 et portant lui-même un galet 30.

Les axes 18, 22 et 28 sont parallèles entre eux et horizontaux.

La coquille 8 porte un nez 32 rigidement solidaire de la coquille et présentant une rampe 34. Cette rampe forme une face orientée en direction opposée à l'axe 12. Cette face est apte à servir de piste de roulement pour le galet 30. La face est profilée, en présentant un tronçon supérieur 36 de profil rectiligne et un tronçon inférieur courbe 38 avec un centre de courbure situé d'un côté de la face opposé à l'axe 12. Les deux tronçons s'étendent en continuité l'un avec l'autre et constituent à eux deux l'intégralité de la rampe 34. L'inclinaison locale de la rampe par rapport à la direction verticale et à l'axe 12 va en augmentant à mesure qu'on s'éloigne de cet axe.

La rampe 34 forme une arête 39 avec une face supérieure horizontale 40 de la coquille. Cette face est en contact surfacique avec une face inférieure horizontale 42 du secteur et permet de guider le mouvement de coulissement horizontal du secteur suivant la direction radiale.

Le secteur 10 comprend une oreille 44 rigidement fixée au secteur et qui forme la liaison du levier avec le secteur en recevant l'arbre 20. Le levier 16 présente deux faces principales plates parallèles à un même plan radial à l'axe 12. L'oreille 44 s'étend des deux côtés du levier 16, en regard de ces deux faces principales, et comprend une jonction 46 recouvrant une face externe 48 du levier orientée en direction opposée à l'axe 12. Cette jonction forme une butée apte à limiter la course du secteur 10 en rotation par rapport au levier 16 lorsqu'il s'éloigne de l'axe 12, la jonction 46 venant en contact avec la face 48 à l'extrémité de cette course.

De façon similaire, la semelle 14 présente un logement 50 recevant le levier 16 et une jonction 52 s'étendant en regard de la face 48 et formant elle aussi une butée apte à limiter la course du levier en rotation par rapport à la semelle lorsqu'il s'éloigne de l'axe 12, la jonction 52 venant en contact avec la face 48.

Nous allons maintenant présenter le fonctionnement du moule en ce qui concerne le déplacement des secteurs 10. Nous ne présenterons pas ci-après les mouvements de la coquille supérieure qui se déplace vers le haut pour l'ouverture du moule puis vers le bas pour la fermeture.

La figure 1 illustre la configuration fermée du moule, l'ébauche n'étant pas illustrée. Les secteurs 10 occupent leur position la plus proche de l'axe 12 et sont en contact surfacique avec la coquille inférieure au moyen des faces 40, 42 et également en contact surfacique avec la coquille supérieure. Le galet 30 est en contact avec l'extrémité supérieure de la rampe 34 formée par l'arête 39, ou bien se trouve très près de cette rampe. L'arbre 20 se trouve à l'extrémité supérieure de la gorge 24.

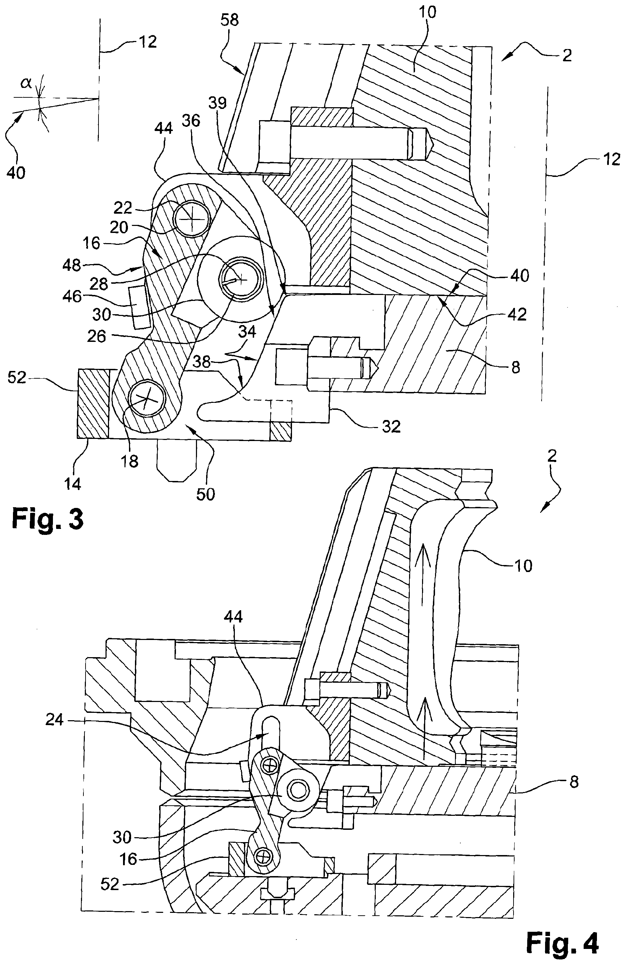

En référence à la figure 4, on commande le coulissement vertical vers le haut de la coquille 8 par rapport au bâti. Chaque secteur 10 est donc lui aussi entraîné en translation suivant la direction verticale. Il en est de même pour l'ébauche. Mais ce mouvement provoque le roulage du galet 30 vers le bas sur le tronçon rectiligne 36 de la rampe. Comme ce tronçon est incliné, le levier 16 entraîne l'oreille et le secteur en coulissement radial par rapport à la coquille 8 pour les éloigner de l'axe 12. En même temps, l'arbre 20 descend dans la gorge 24. La forme de la rampe est adaptée pour que, dans le repère de la coquille, le secteur ait un mouvement rectiligne purement radial, de sorte que les éléments de sculpture portés par le secteur sont extrait de la bande de roulement du pneumatique, qui suit également le mouvement de la coquille, selon une trajectoire purement radiale.

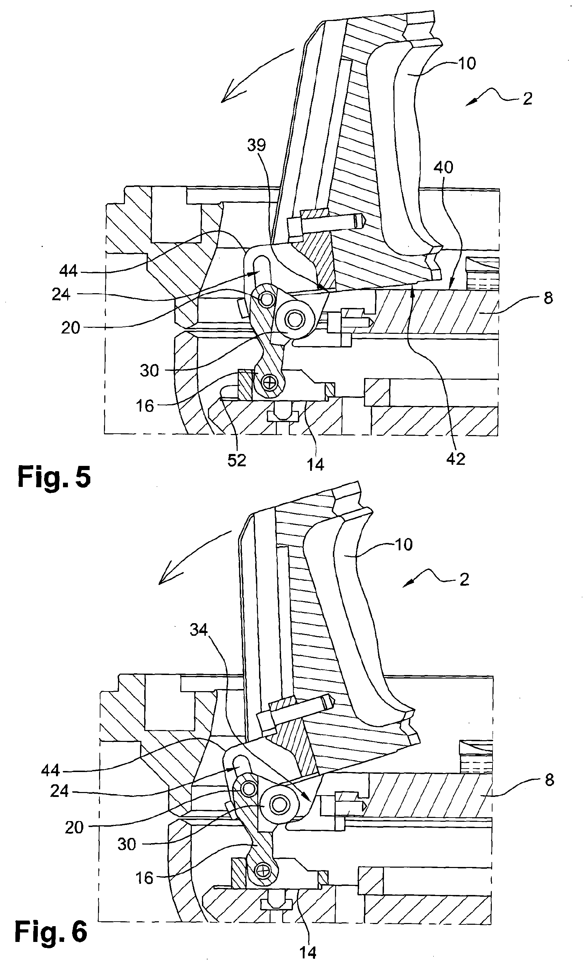

En référence à la figure 5, le coulissement vers le haut de la coquille se poursuit. Le galet parcourt le tronçon rectiligne 36 puis le tronçon courbe 38. Lorsqu'il arrive sur ce dernier, les secteurs se sont séparés de la bande de roulement de sorte que le tronçon courbe peut déplacer le secteur plus rapidement en direction radiale. Mais vient un moment où l'arbre 20 arrive à l'extrémité inférieure de la gorge 24. La suite de la montée de la coquille entraîne alors le basculement du secteur en rotation radialement vers l'extérieur, le secteur prenant appui sur l'arête 39 de sorte que la face 42 se décolle de la face 40. Ce basculement éloigne lui aussi le secteur par rapport à l'axe 12. On observe que ce basculement est permis par le fait que l'axe 22 se trouve au-delà de la rampe par référence à la direction radiale.

Une variante d'exécution consiste à incliner légèrement vers le bas la partie radialement externe de la face 40 de la coquille de manière à favoriser le basculement du secteur. L'angle d'inclinaison α par rapport au plan, perpendiculaire à l'axe, de la coquille, peut être utilement compris entre 0° et 5°, comme illustré à la figure 3.

En référence à la figure 6, le basculement continue avec la poursuite de la montée de la coquille. Mais il entraîne que l'arbre 20 remonte dans la gorge 24.

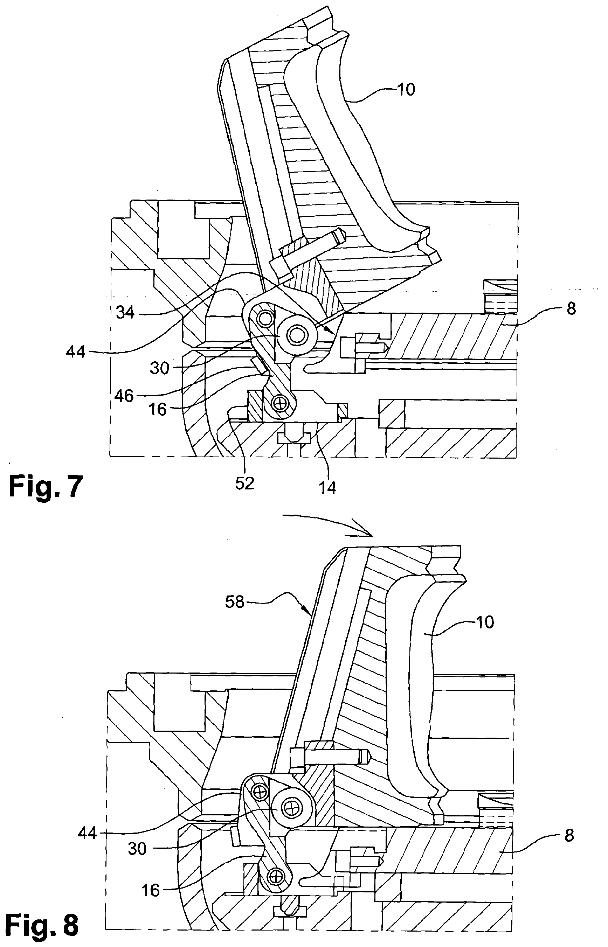

En référence à la figure 7, au cours de la suite du mouvement, le galet s'éloigne de la rampe de sorte que le levier 16 n'est plus relié qu'à la semelle 14 d'une part et à l'oreille 44 d'autre part. Les jonctions 46 et 52 définissent une extrémité des courses de basculement du levier et du secteur, interdisant ainsi que ces éléments ne s'éloignent trop de l'axe 12. On interrompt la montée de la coquille avant que l'arbre 22 atteigne de nouveau l'extrémité supérieure de la gorge 24 et avant la mise en butée du levier et du secteur sur les jonctions. On a alors atteint la configuration ouverte du moule qui permet l'extraction de l'enveloppe de pneumatique cuite et la mise en place d'une ébauche crue destinée à être vulcanisée.

Une fois l'ébauche installée, on procède à la fermeture du moule. Pour cela, on fait coulisser la coquille inférieure 8 suivant la direction axiale mais cette fois vers le bas. Au cours de ce mouvement, le secteur qui est demeuré en appui sur l'arête 39 par gravité bascule avec le levier 16 pour se rapprocher de l'axe 12 jusqu'à réaliser de nouveau le contact entre les faces 40 et 42, comme illustré à la figure 8. La position du secteur et du levier la plus éloignée de l'axe est en effet définie par rapport aux axes de rotation 18 et 22 de telle sorte que le secteur tend par gravité à se rapprocher de l'axe lorsque le mouvement de la coquille le lui permet. Au cours de ces deux courses du secteur et du levier dont les extrémités sont illustrées respectivement aux figures 7 et 8, le galet 30 demeure hors de contact avec la rampe et plus généralement avec la coquille.

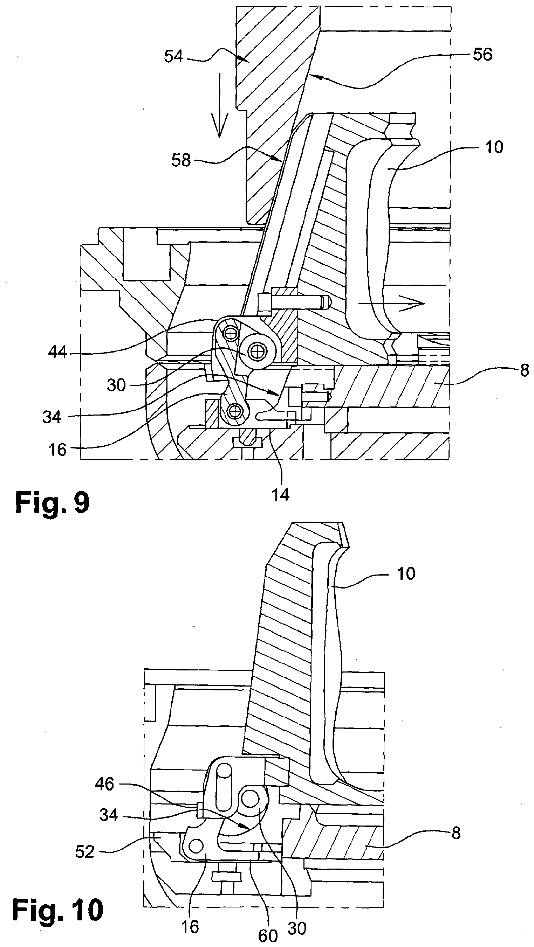

En référence à la figure 9, on fait ensuite coulisser vers le bas suivant la direction axiale un anneau de frettage 54 qui présente une face interne tronconique 56 apte à coopérer avec une face externe tronconique 58 des secteurs de sorte que le glissement de ces faces l'une sur l'autre provoque le coulissement radial des secteurs en direction de l'axe 12. Les deux faces tronconiques ont même rayon et ont l'axe 12 pour axe commun. À la fin de ce mouvement, le moule se retrouve dans la configuration de la figure 1.

On observe ici que, lorsque l'anneau de frettage 54 n'est pas encore engagé au dos des secteurs, les secteurs reposent sur la partie radialement externe de la face 40. Lorsque cette partie radialement externe présente une légère pente, comme cela a été indiqué ci-dessus, les secteurs sont alors légèrement inclinés radialement vers l'extérieur. Cette disposition a pour effet d'agrandir le passage au niveau de la partie supérieure des secteurs et de favoriser l'introduction d'un pneumatique.

Le mécanisme assurant le guidage du mouvement des secteurs est compact et réduit les risques d'usure due au frottement des pièces. Grâce à cet encombrement réduit, un tel mécanisme peut équiper des moules comprenant jusqu'à une vingtaine de secteurs voire plus. Il permet de réduire les efforts à produire pour le démoulage de l'enveloppe notamment lorsque celle-ci a des sculptures agressives en autorisant un déboitage des éléments de sculpture dans une direction essentiellement radiale par rapport au pneumatique.

Le galet forme une pièce d'usure. C'est à lui que revient le rôle d'encaisser les efforts de démoulage.

On a illustré un deuxième mode de réalisation du moule à la figure 10. Ce mode de réalisation ne diffère du précédent que par certains détails. Le principal réside dans un prolongement que présente le levier 16 et qui prend ici la forme d'une palette 60 s'étendant sous la partie de la coquille portant la rampe. Ainsi, lors de la descente de la coquille, l'appui de la coquille sur la palette entraîne le basculement du levier en direction de l'axe. Ainsi, il n'est pas nécessaire de configurer le mécanisme pour que le rapprochement du secteur par rapport à l'axe ait lieu par gravité comme dans le mode de réalisation précédent. La palette permet aussi de limiter le basculement du levier en direction opposée lors de l'ouverture du moule. Par ailleurs, la rampe présente un profil courbe sur toute sa longueur.

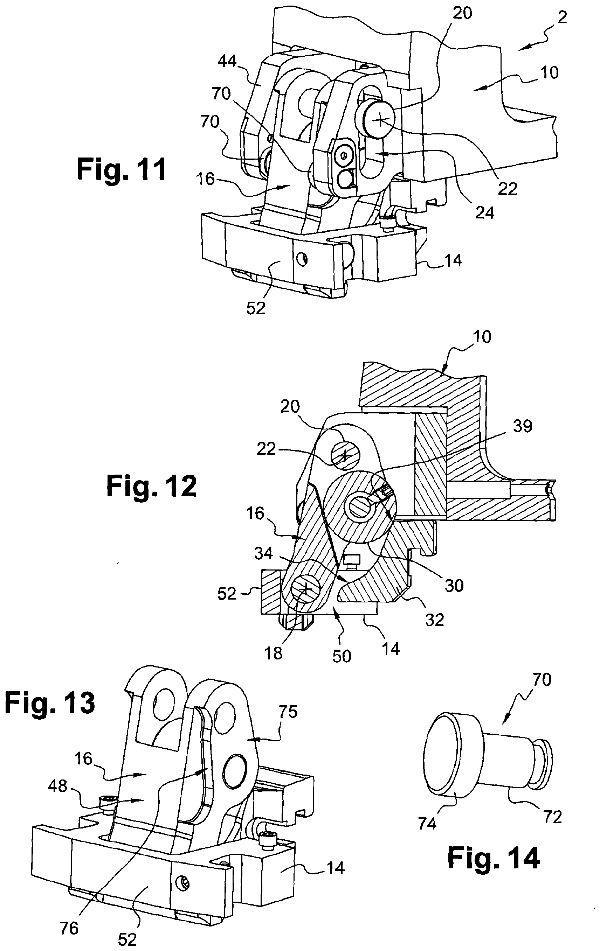

On a illustré aux figures 11 à 16 un troisième mode de réalisation du moule selon l'invention. Il ne diffère du premier mode que par certains détails. Principalement, il vise à remplacer la butée 46 par les moyens qui vont être décrits ci-après.

Les deux flancs de l'oreille 44 entre lesquels est reçu le levier 16 portent deux pions respectifs 70 illustrés à la figure 14. Chaque pion est monté mobile à rotation sur le flanc qui le porte, les deux pions ayant même axe de rotation. Les flancs présentent deux faces respectives en regard l'une de l'autre. Les pions s'étendent en saillie des faces correspondantes. Chaque pion comprend un arbre 72 assurant son montage à rotation dans l'oreille et un galet 74 d'une seule pièce avec l'arbre, rigidement solidaire de ce dernier et s'étendant en saillie du flanc.

Le levier 16 présente deux faces latérales planes 75 parallèles entre elles et s'étendant en regard des flancs de l'oreille respectivement. Chacune de ces faces est entamée à partir d'une zone médiane de la face jusqu'à son bord arrière afin de définir un évidement dont le bord avant forme une rampe non plane 76 mais dont les génératrices sont perpendiculaires à la face 75. Les deux extrémités de la rampe débouchent dans le bord arrière de la face 75 et sont incurvées. Les galets 74 des pions sont logés dans les évidements correspondants de façon à rouler sur les rampes 76.

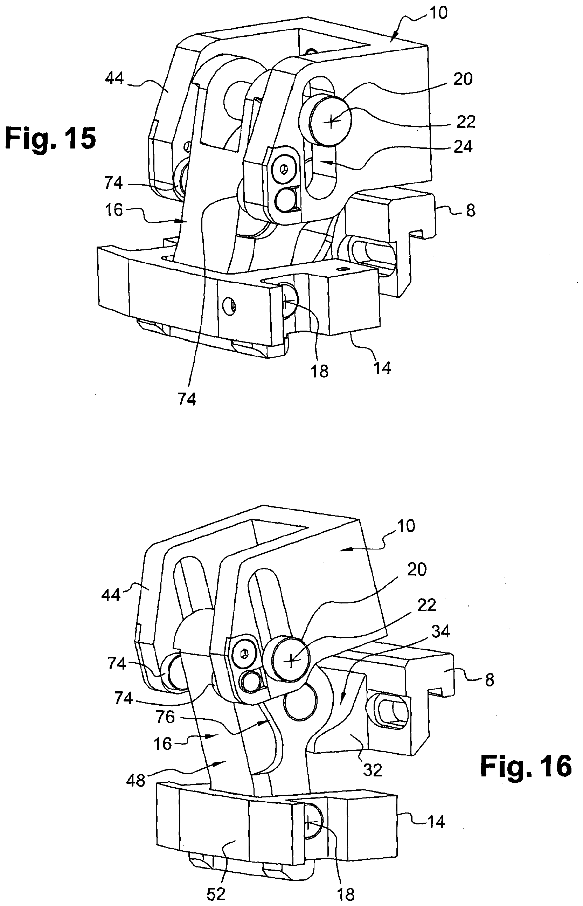

On a illustré à la figure 15 les pièces correspondantes en position de fermeture du moule. Chaque galet 74 est alors en contact avec la moitié inférieure de la rampe correspondante.

L'ouverture du moule débute comme expliqué dans le premier mode de réalisation.

A mesure que la coquille 8 monte par rapport au bâti et que l'arbre 20 descend dans les gorges 24, les galets 74 roulent contre les rampes en direction du sommet de celles-ci.

Vient donc le moment où l'arbre 20 arrive à l'extrémité inférieure des gorges 24. A ce moment, les galets viennent en butée contre la zone d'extrémité supérieure incurvée des rampes. La coquille 8 tend à faire tourner le secteur 10 autour de l'axe 22 dans le sens contraire des aiguilles d'une montre sur la figure 16. Mais compte tenu de la position des galets et des rampes par rapport à l'axe 22, cette rotation tend en fait à rapprocher les galets des rampes. Toute rotation supplémentaire du secteur 10 par rapport au levier 16 autour de cet axe en direction radiale opposée à l'axe du moule est donc empêchée de sorte que le secteur se trouve en butée contre le levier. Cela empêche le secteur 10 de basculer davantage par rapport au levier 16. C'est donc cette fois la coopération des galets avec les rampes qui forme la butée qui définit la limite de rotation du secteur par rapport au levier, ce qui était assuré par la butée 46 dans le premier mode de réalisation.

Ce mode de réalisation de la butée est plus robuste et durable que celui du premier mode, notamment lorsque ce dernier est réalisé par une barrette soudée.

Cet effet de butée peut d'ailleurs être accentué en donnant une forme renflée à l'extrémité supérieure de la rampe comme illustré notamment aux figures 13 et 15.

Par ailleurs, le basculement du levier (et du secteur) par rapport à la semelle 14 est permis et se produit mais est finalement limité par la butée 52 comme précédemment.

Bien entendu, on pourra apporter à l'invention de nombreuses modifications sans sortir du cadre de celle-ci.

On peut se dispenser de prévoir les fonctions limitant le basculement du levier et du secteur en direction opposée à l'axe.

On peut équiper le galet d'une bague en polytétrafluoroéthylène, le réaliser en bronze ou encore dans un autre matériau.

## Revendications

1. Moule (2) de cuisson d'une ébauche d'enveloppe de pneumatique, qui comporte:
- un bâti (4) présentant un axe (12),
- au moins une coquille (8) apte à mouler un flanc de l'enveloppe, mobile axialement et présentant une rampe (34) formant une face orientée en direction opposée à l'axe,
- des secteurs (10) répartis circonférentiellement et destinés à mouler une bande de roulement de l'enveloppe et
- pour au moins l'un des secteurs, un levier (16) relié d'une part au secteur, d'autre part au bâti et apte à être relié d'autre part encore à la rampe de sorte qu'un mouvement axial d'éloignement de la coquille par rapport au bâti entraîne successivement un mouvement radial du secteur par rapport à la coquille puis un basculement du secteur radialement vers l'extérieur.

2. Moule selon la revendication précédente dans lequel le levier porte un galet (30) apte à rouler sur la rampe.

3. Moule selon la revendication précédente agencé de sorte que la coquille déplace le secteur jusqu'à un point à partir duquel le galet (30) n'est plus en contact avec la coquille.

4. Moule selon au moins l'une quelconque des revendications précédentes agencé de sorte qu'un coulissement axial de la coquille (8) en direction du bâti, combiné à l'effet de la gravité, entraîne un basculement du secteur radialement vers l'intérieur.

5. Moule selon au moins une des revendications précédentes, agencé de sorte que le secteur (10) vient en contact avec une face (40) de la coquille qui est inclinée par rapport à un plan perpendiculaire à l'axe (12) et en direction opposée à l'axe, l'angle (α) de la face par rapport au plan étant compris de préférence entre 0° et 5°.

6. Moule selon au moins l'une quelconque des revendications précédentes dans lequel le levier est articulé au secteur autour d'un axe (22) monté coulissant dans un logement du secteur.

7. Moule selon au moins l'une quelconque des revendications précédentes qui comprend des moyens formant butée (46 ; 74, 76) aptes à limiter une rotation du secteur par rapport au levier en direction opposée à l'axe.

8. Moule selon au moins l'une quelconque des revendications précédentes dans lequel le levier (16) est monté de façon à être uniquement mobile à rotation par rapport au bâti.

9. Moule selon au moins l'une quelconque des revendications précédentes qui comprend une butée (52) apte à limiter une rotation du levier par rapport au bâti en direction opposée à l'axe (12).

10. Moule selon au moins l'une quelconque des revendications précédentes dans lequel la rampe (34) présente un profil non rectiligne.

11. Moule selon au moins l'une quelconque des revendications précédentes dans lequel la rampe (34) présente une inclinaison par rapport à l'axe plus forte dans un tronçon correspondant à la fin du mouvement d'éloignement que dans un tronçon correspondant au début de ce mouvement.

12. Moule selon au moins l'une quelconque des revendications précédentes dans lequel la rampe présente une portion (38) à profil courbe ayant un centre de courbure situé d'un côté de la rampe opposé à l'axe.

13. Moule selon au moins l'une quelconque des revendications précédentes dans lequel la rampe présente une portion (36) à profil rectiligne.

14. Moule selon au moins l'une quelconque des revendications précédentes dans lequel le levier présente un prolongement (60) apte à s'étendre sous la coquille.

15. Procédé de fabrication d'une enveloppe de pneumatique, dans lequel on utilise un moule (2) selon au moins l'une quelconque des revendications précédentes.

## Patentansprüche

1. Form (2) zum Backen eines Luftreifenmantel-Rohlings, die Folgendes umfasst:
- einen Rahmen (4), der eine Achse (12) aufweist,
- wenigstens eine Kokille (8), mit der eine Mantelflanke gegossen werden kann, die axial beweglich ist und die eine Rampe (34) aufweist, die eine Fläche bildet, die in einer zu der Achse entgegengesetzten Richtung orientiert ist,
- Sektoren (10), die in Umfangsrichtung verteilt sind und dazu bestimmt sind, eine Lauffläche des Mantels zu gießen, und
- für wenigstens einen der Sektoren einen Hebel (16), der einerseits mit dem Sektor und andererseits mit dem Rahmen verbunden ist und andererseits auch mit der Rampe verbunden ist, derart, dass eine axiale Bewegung der Kokille weg von dem Rahmen nacheinander eine radiale Bewegung des Sektors in Bezug auf die Kokille und dann ein radiales Kippen des Sektors nach außen zur Folge hat.

2. Form nach vorhergehendem Anspruch, wobei der Hebel eine Rolle (30) trägt, die auf der Rampe rollen kann.

3. Forderung nach dem vorhergehenden Anspruch, die dafür ausgelegt ist, dass die Kokille den Sektor bis zu einem Punkt verlagert, ab dem die Rolle (30) nicht mehr mit der Kokille in Kontakt ist.

4. Form nach wenigstens einem der vorhergehenden Ansprüche, die dafür ausgelegt ist, dass ein axiales Gleiten der Kokille (8) in Richtung des Rahmens kombiniert mit der Wirkung der Schwerkraft ein Kippen des Sektors radial nach außen zur Folge hat.

5. Form nach wenigstens einem der vorhergehenden Ansprüche, die dafür ausgelegt ist, dass der Sektor (10) mit einer Fläche (40) der Kokille in Kontakt gelangt, die in Bezug auf eine Ebene senkrecht zu der Achse (12) und in einer Richtung entgegengesetzt zu der Achse geneigt ist, wobei der Winkel (α) der Fläche in Bezug auf die Ebene vorzugsweise in einem Bereich von 0° bis 5° liegt.

6. Form nach wenigstens einem der vorhergehenden Ansprüche, wobei der Hebel an dem Sektor um eine Achse (22) angelenkt ist, die in einem Aufnahmeraum des Sektors gleitend montiert ist.

7. Von wenigstens einem der vorhergehenden Ansprüche, die Mittel umfasst, die einen Anschlag (46; 74, 76) bilden, der eine Drehung des Sektors in Bezug auf den Hebel in der zu der Achse entgegengesetzten Richtung begrenzen kann.

8. Form nach wenigstens einem der vorhergehenden Ansprüche, wobei der Hebel (16) in der Weise montiert ist, dass er in Bezug auf den Rahmen ausschließlich rotatorisch beweglich ist.

9. Form nach wenigstens einem der vorhergehenden Ansprüche, die einen Anschlag (52) umfasst, der eine Drehung des Hebels in Bezug auf den Rahmen in der zu der Achse (12) entgegengesetzten Richtung begrenzen kann.

10. Form nach wenigstens einem der vorhergehenden Ansprüche, wobei die Rampe (34) ein nicht geradliniges Profil aufweist.

11. Form nach wenigstens einem der vorhergehenden Ansprüche, wobei die Rampe (34) eine Neigung in Bezug auf die Achse aufweist, die in einem Teilstück, das dem Ende der Entfernungsbewegung entspricht, größer als in einem entsprechenden Teilstück am Beginn dieser Bewegung ist.

12. Form nach wenigstens einem der vorhergehenden Ansprüche, wobei die Rampe einen Abschnitt (38) mit gekrümmten Profil aufweist, dessen Krümmungszentrum sich auf einer der Achse entgegengesetzten Seite der Rampe befindet.

13. Form nach wenigstens einem der vorhergehenden Ansprüche, wobei die Rampe einen Abschnitt (36) mit geradlinigem Profil aufweist.

14. Form nach wenigstens einem der vorhergehenden Ansprüche, wobei der Hebel eine Verlängerung (60) aufweist, die sich unter die Kokille erstrecken kann.

15. Verfahren für die Herstellung eines Luftreifenmantels, in dem eine Form (2) nach wenigstens einem der vorhergehenden Ansprüche verwendet wird.

## Claims

1. Mould (2) for curing a green tyre casing, which comprises:
- a supporting structure (4) having an axis (12),
- at least one shell (8) that is able to mould a sidewall of the casing, said shell being able to move axially and having a ramp (34) that forms a face oriented in the direction away from the axis,
- segments (10) that are distributed circumferentially and are intended to mould a tread of the casing, and,
- for at least one of the segments, a lever (16) that is connected on one side to the segment and on the other side to the supporting structure and is also able to be connected to the ramp such that an axial movement of the shell away from the supporting structure successively causes a radial movement of the segment with respect to the shell and then tilting of the segment radially towards the outside.

2. Mould according to the preceding claim, wherein the lever bears a roller (30) that is able to roll on the ramp.

3. Mould according to the preceding claim, which is designed such that the shell moves the segment as far as a point from which the roller (30) is no longer in contact with the shell.

4. Mould according to at least any one of the preceding claims, which is designed such that axial sliding of the shell (8) in the direction of the supporting structure, combined with the effect of gravity, causes the segment to tilt radially towards the inside.

5. Mould according to at least one of the preceding claims, which is designed such that the segment (10) comes into contact with a face (40) of the shell which is inclined with respect to a plane perpendicular to the axis (12) and in the direction away from the axis, the angle (α) of the face with respect to the plane being preferably between 0° and 5°.

6. Mould according to at least any one of the preceding claims, wherein the lever is articulated to the segment about a spindle (22) mounted in a sliding manner in a housing in the segment.

7. Mould according to at least any one of the preceding claims, which comprises means forming a stop (46; 74, 76) that are able to limit a rotation of the segment with respect to the lever in the direction away from the axis.

8. Mould according to at least any one of the preceding claims, wherein the lever (16) is mounted so as to be only able to rotate with respect to the supporting structure.

9. Mould according to at least any one of the preceding claims, which comprises a stop (52) that is able to limit a rotation of the lever with respect to the supporting structure in the direction away from the axis (12).

10. Mould according to at least any one of the preceding claims, wherein the ramp (34) has a non-rectilinear profile.

11. Mould according to at least any one of the preceding claims, wherein the ramp (34) has an inclination with respect to the axis that is greater in a section corresponding to the end of the movement apart than in a section corresponding to the start of this movement.

12. Mould according to at least any one of the preceding claims, wherein the ramp has a portion (38) with a curved profile having a centre of curvature located on a side of the ramp away from the axis.

13. Mould according to at least any one of the preceding claims, wherein the ramp has a portion (36) with a rectilinear profile.

14. Mould according to at least any one of the preceding claims, wherein the lever has an extension (60) that is able to extend under the shell.

15. Method for manufacturing a tyre casing, wherein use is made of a mould (2) according to at least any one of the preceding claims.
